# EUROPEAN PATENT APPLICATION

(11) **EP 4 381 942 A1**
(43) Date of publication of application: **12.06.2024**
(21) Application number: 23215691.9
(22) Date of filing: 11.12.2023
(51) Int. Cl.: A01K 61/54, B66F 9/065, B66F 9/18

(54) **AQUACULTURE APPARATUS AND METHOD**

(30) Priority: 09.12.2022 GB 202218591
(71) Applicant: Sean Phobal Engineering Limited, Waterford (IE)
(72) Inventor: FRENCH, Michael, Waterford (IE); HARTY, Colin, Waterford (IE)
(74) Representative: Keltie Ltd

(57) **Abstract**

A method of aquaculture comprises cultivating marine organisms such as oysters in cultivation bags (202) disposed in a basket (200) or on a trestle (100), lifting the basket or trestle, turning the basket or trestle and replacing it onto the supporting surface or substrate. A machine (600) to carry out the method comprises a support structure (606) configured for attachment to a vehicle; an engagement formation (602) cantilevered from a beam (608) that is movable or extensible relative to the support structure in a direction transverse to a direction of travel (614) of the vehicle; and a pivot (610) supporting the engagement formation for pivotal movement relative to the support structure about an axis (612) transverse to the direction of travel of the vehicle.

## Description

### Introduction

This invention relates to the cultivation of shellfish, particularly the cultivation of molluscs such as oysters.

### Background of the invention

Cultivation of oysters will be used in this specification to exemplify the invention, it being understood that the inventive concept may be applied more generally to the cultivation of other marine organisms.

In modern oyster cultivation, oysters are held in shallow, pouch-like net or mesh bags each having two opposed major faces joined by narrow edges around their periphery. Oyster bags can vary in mesh density depending on the size of the oysters contained within. The bags have become somewhat standardised in overall size at about one metre long by about half a metre wide, although those dimensions and particularly their width may vary.

As oysters grow, they are sorted by size into appropriate bags with particular attention being paid to how many oysters are contained within each bag to minimise competition for food. The bags are typically elevated above the seabed on purpose-made trestles where they lie horizontally, exposed to nutrient-bearing water flow across both faces of the bags and from face to face through the bags.

Typically, aquaculture trestles are fabricated from steel reinforcement bar of 16mm to 20mm in diameter. Each trestle is sized to hold approximately five to seven oyster bags, arranged side-by-side along the length of the trestle. This is regarded as the maximum capacity of a trestle as it is not advisable to stack oyster bags on top of one another. Stacking bags would increase competition for food and could promote 'clumping', where oyster shells become permanently attached to one another.

Oyster bags must be turned occasionally to prevent weed from accumulating on the upwardly-facing side that is exposed to the sun. Excessive weed build-up hinders flushing of seawater bearing nutrients to feed the oysters within the bags. Turning the bags faces any weed downwardly and so puts it in shadow, preventing the weed from photosynthesising and thus causing it eventually to die and fall off the bag.

Individual and well-formed oysters have enhanced desirability and hence saleability. In this respect, turning and gently agitating the bags helps the oysters within them to grow uniformly and discourages clumping. However, care must be taken not to agitate the bags too much as otherwise the hinges of the oyster shells could be damaged, which can prove fatal to them.

Oysters are typically cultivated in areas of calm, shallow brackish water such as estuaries and confined bays. For example, the trestles may be positioned where the bags are immersed at high tide but accessible at low tide.

Currently, turning oyster bags is primarily a manual operation. This is challenging due to the time restriction of working at low tide, often in bad light and in bad weather. Also, trestles are quite low, typically between sixty centimetres to one metre in height, and each bag with its contents can weigh up to 30kg.

Lifting and manipulating such heavy, slippery bags by hand presents health and safety challenges for workers in the aquaculture industry.

Generally, oyster bags are held to trestles by temporary fasteners such as rubber bands or plastic hooks. Such fasteners are fiddly to use and susceptible to being dropped or broken as the rubber or plastic perishes or weathers. However, they are inexpensive and so are regarded as disposable items to be discarded where they fall. As this contributes to pollution of the oceans with microplastics, it is possible that the use of plastics in the aquaculture industry will be heavily regulated or even banned in the future.

IE 20200153 describes an apparatus and method that flips oyster bags using the changing water level of the tide. However, this proposal limits the number of bags per unit area and uses plastic in the design. Also, shaking the bags to prevent clumping remains a manual operation because slow movement of the apparatus driven by the changing tide would not be effective to prevent clumping. Another drawback is that the bags are always the same way up at low tide, hence biasing growth of vegetation on the side of the bags that is consistently exposed to the sun at low tide.

WO 2020/246958 describes a tidal rotating oyster shaper and cleaner apparatus and method. This features a ratchet and pawl mechanism that is an improvement over IE 20200153 in that the oyster containers are rotated fully and not just inverted with the changing tides, solving the problem of weed build-up. However, the use of such a mechanism in the harsh environment of the sea may be impractical.

US 4704990 and WO 2018201191 describe cultivation of oysters using water flow and tides to drive movement of a container containing the oysters. The constant movement of the container may risk damage to the oysters. Also, harvesting is complicated by having to remove the individual oysters manually, directly from the container *in situ.*

GB 2543887 describes a stand with a rotatable basket suitable for cultivating molluscs. The basket is rotated manually with or without the help of mechanical advantage provided by a removable transmission. As with WO 2020/246958, the mechanism may be impractical for use in the harsh environment of the sea. Also, GB 2543887 seeks to increase the number of oyster bags per unit area of seabed by supporting two layers of bags in the basket, one layer immediately on top of the other layer. This is little better than stacking bags on a trestle as it increases competition between the oysters for nutrients.

All of the abovementioned prior art documents use moving parts such as hinges, pivots or slides in a hostile and corrosive environment. Materials or coatings to overcome the effects of corrosion or marine deposition may be ineffective or expensive.

It is against this background that the invention has been devised.

### Summary of the invention

The invention resides in a method of aquaculture comprising: cultivating marine organisms in a series of cultivation bags disposed in side-by-side, edge-to-edge relation; lifting the series of bags together from a supporting surface or substrate; turning the series of bags together; and replacing the series of bags onto the supporting surface or substrate together.

The method may comprise lifting the series of bags from, and replacing the series of bags onto, a trestle that serves as the supporting surface and may further comprise agitating the series of bags together. Additionally, the method may comprise cultivating the organisms in the series of bags held together in a basket, and lifting, turning and replacing the basket containing the series of bags. In that case, the basket may be fastened to the trestle by capturing a frame of the trestle between a lower face of the basket and one or more fasteners extending parallel to the lower face of the basket.

The method may include engaging the basket with an engagement formation of a manipulating machine, and using the machine to lift, turn and replace the basket.

The method may comprise holding parallel series of bags in respective levels of the basket one above another, those levels being separated by an intermediate level of the basket that defines a water channel sandwiched between the parallel series of bags. The method could also comprise inserting the engagement formation of the machine into the intermediate level of the basket between the parallel series of bags or more generally at a level above or below a series of bags.

The method may also comprise loading or unloading bags through at least one aperture in an edge face of the basket extending between major upper and lower faces of the basket. The or each aperture may be closed with a movable or removable closure after loading the bags into the basket. It would be possible to close two or more apertures by placing a common closure across those apertures.

The method may comprise lifting the series of bags on a trestle from the seabed, the seabed therefore serving as the supporting surface. The method may further comprise engaging the trestle with an engagement formation of a manipulating machine, and using the machine to lift, turn and replace the trestle, possibly also gripping one or more legs of the trestle with the machine. Furthermore, the series of bags could be restrained on the trestle with a retaining structure of the machine, spaced from the engagement formation.

The method may comprise: advancing the machine along a direction of travel to a position beside the basket or trestle; extending the engagement formation toward the basket or trestle in a direction transverse to the direction of travel; engaging the engagement formation with the basket or trestle; lifting the engagement formation with the engaged basket or trestle; and turning the engagement formation with the engaged basket or trestle. To execute this, the machine may be supported on a vehicle and so may extend, lift and turn the engagement formation relative to the vehicle.

The inventive concept also embraces an aquaculture basket for use in the method of the invention. The basket comprises edge faces disposed between upper and lower faces and contains: at least one cultivation level that is configured to hold a series of cultivation bags in side-by-side, edge-to-edge relation, at which level the edge faces of the basket are closed sufficiently to retain the bags within; and at least one access level, at which level at least one of the edge faces of the basket is open to provide internal access to the basket; and the basket further comprises a closure that closes at least one aperture through which the bags can be inserted into the cultivation level, which closure can be moved or removed to open the or each aperture.

The aperture through which the bags can be inserted into the cultivation level may be in an edge face of the basket and the respective closure could, for example, comprise at least one barrier extending across the aperture parallel to the edge face.

The basket may be defined by a framework of elongate members disposed in substantially parallel arrays, those arrays defining the or each cultivation level and the or each access level between them. The closure may comprise at least one barrier extending across the aperture parallel to the edge face. Furthermore, the framework of elongate members may be disposed in substantially parallel arrays, those arrays defining the or each cultivation level and the or each access level between them. The arrays may further define the upper and lower faces of the basket.

The cultivation level may be subdivided into a row of compartments by upright elements such as columns that extend between the arrays defining the cultivation level. In that case, a common closure can extend along the row of compartments to close apertures communicating with the respective compartments. The access level may comprise fewer upright elements than the cultivation level and may be sandwiched between first and second cultivation levels.

The basket could comprise legs that extend outwardly relative to the upper and/or lower faces.

The invention further contemplates, in combination, an aquaculture basket and a fastener comprising an elongate rod that is engageable with a lower face of the basket at locations mutually spaced along the rod, those locations also being adjacent to respective opposed edge faces of the basket. At least one end of the rod may comprise a hook that is engageable with the lower face of the basket to define a pivot axis for pivotal movement of the rod relative to the basket. The combination may further comprise a trestle beneath the basket, a supporting frame of the trestle being captured between the rod and the lower face of the basket.

The invention further contemplates a machine for manipulating a set of aquaculture bags supported together on a trestle or in a basket, the machine comprising: a support structure configured for attachment to a vehicle; an engagement formation cantilevered from a beam that is movable or extensible relative to the support structure in a direction transverse to a direction of travel of the vehicle; and a pivot supporting the engagement formation for pivotal movement relative to the support structure about an axis transverse to the direction of travel of the vehicle.

The pivot supporting the engagement formation may act between the engagement formation and the beam and could turn on an axis that is offset downwardly relative to the beam. Conversely, the beam may be pivotable relative to the support structure about an axis that is parallel to the direction of travel of the vehicle and the support structure may be arranged to elevate the beam relative to the vehicle.

The manipulation machine may further comprise at least one gripper that is movable with the engagement formation, the gripper comprising an arm that is pivotable about an upright axis to capture an upright member of the trestle or basket. The gripper may also be pivotable about a substantially horizontal axis to change the orientation of the upright axis. The machine could further comprise an auxiliary retaining structure extending above and generally parallel to the engagement formation.

The inventive concept also extends to a vehicle fitted with the manipulation machine of the invention.

The invention seeks to make aquaculture simpler, less reliant on manual labour and more efficient, particularly when applied to cultivation of molluscs such as oysters. The invention contemplates apparatus that reduces manual labour and increases the yield per unit area of seabed while producing oysters of high quality.

Aquaculture apparatus of the invention can employ existing standard cultivation equipment such as oyster bags and trestles, thereby minimising the financial burden of implementation for an existing aquaculture business. Implementation is also simplified as there is no need for a farmer to alter the existing arrangement of their trestles. The apparatus can simply be attached to the existing trestles *in situ.*

Apparatus of the invention can be implemented on trestles that already support the growth of oysters. When the time comes to turn the bags, the bags can be removed from the trestle and the apparatus can be placed on the trestle before the bags are agitated, inverted and placed into the apparatus on the trestle to resume growth.

As mentioned above, a standard aquaculture trestle is capable of supporting five to seven oyster bags without compromising development of the oysters contained within the bags. The apparatus of the invention is capable of supporting up to fourteen oyster bags, hence up to double the amount of the standard trestle and thereby doubling the possible yield per unit area of seabed. In some embodiments, the apparatus achieves this by supporting the bags in distinct containment or cultivation layers or levels that are separated by a separation or access layer or level. This improves efficiency of seabed use without compromising growth of the oysters because the layers of oyster bags are kept separate from one another, hence minimising competition for nutrients.

The apparatus can be lifted from the trestle and turned as a whole, thereby turning up to fourteen oyster bags in one operation. To preserve health and safety and to minimise the requirement for manual labour, turning can be performed by a machine of the invention, which is apt to be mounted on a vehicle such as a tractor. This increases the rate at which bags can be turned, which is particularly useful when operating in a restricted time window between high tides.

The turning machine of the invention may have adjustable features to make it compatible with the abovementioned cultivation apparatus or standard aquaculture trestles alike. In other words, the benefit of reduction of manual labour can be realised with or without the cultivation apparatus of the invention, although a combination of the cultivation apparatus and the turning machine yields the largest benefit.

The turning machine may feature a cantilevered engagement formation, such as a fork, that is offset from a telescopic or otherwise laterally extending beam or arm. Beneficially, this allows the machine to be used where space is at a premium, for example if rows of trestles are positioned close to one another. In that case, the cantilever member could be offset to the extent that the extending arm can pass over the top of trestles disposed between the fork and the proximal end of the arm.

The invention also contemplates ways of attaching the cultivation apparatus to a trestle that are much more robust, reliable and environmentally friendly than the standard approach of using rubber bands or plastic hooks.

When it comes to harvesting, bags can be removed from the apparatus and loaded onto a trailer to be brought back to a facility for processing. Alternatively, the apparatus can be transported to the processing facility with the bags within, hence conveniently carrying multiple bags at once.

The cultivation apparatus of the invention benefits from simplicity and from a lack of articulating joints, hinges, pivots or slides that would be prone to seize up in the harsh environment of the sea. The resulting longevity maximises value for the farmer.

### Brief description of the drawings

In order that the invention may be more readily understood, reference will now be made, by way of example, to the accompanying drawings in which:
Figure 1 is a perspective view of a conventional trestle in combination with a basket of the invention that can be attached to the trestle by fasteners of the invention;
Figure 2 is a front elevation of the assembly shown in Figure 1;
Figure 3 is an exploded perspective view of the assembly shown in Figure 1;
Figure 4 is a perspective view of a basket of the invention;
Figure 5 is a front elevation of the basket shown in Figure 4;
Figure 6 is a side elevation of a fastener of the invention;
Figures 7A to 7C illustrate a sequence by which the fastener of Figure 6 is attached to a basket of the invention to hold the basket on a conventional trestle when creating the assembly shown in Figure 1;
Figure 8 is a perspective view that shows an alternative embodiment of the fastener shown in Figure 6;
Figure 9 is a front elevation of a alternative embodiment of the basket shown in Figures 4 and 5;
Figure 10 is an perspective view of a turning apparatus for manipulating a basket of the invention;
Figure 11 is a side elevation of the apparatus shown in Figure 10;
Figures 12A and 12B are front elevations of the apparatus shown in Figure 11, where Figure 12A shows the apparatus in a retracted state and Figure 12B shows the apparatus in a deployed state;
Figures 13A to 13G are front and side views that show the manipulating apparatus of the invention and illustrate a sequence by which the apparatus manipulates a basket of the invention;
Figures 14A to 14E are front and perspective views that illustrate a sequence by which gripping mechanisms are adapted to grip the legs of a conventional trestle;
Figure 15 is a perspective view of a variant of the apparatus that can be used to hold a basket on a trestle during manipulation or to manipulate a trestle that supports bags of shellfish in a conventional manner; and
Figure 16 is a front elevation of the apparatus shown in Figure 15.

### Detailed description of specific embodiments

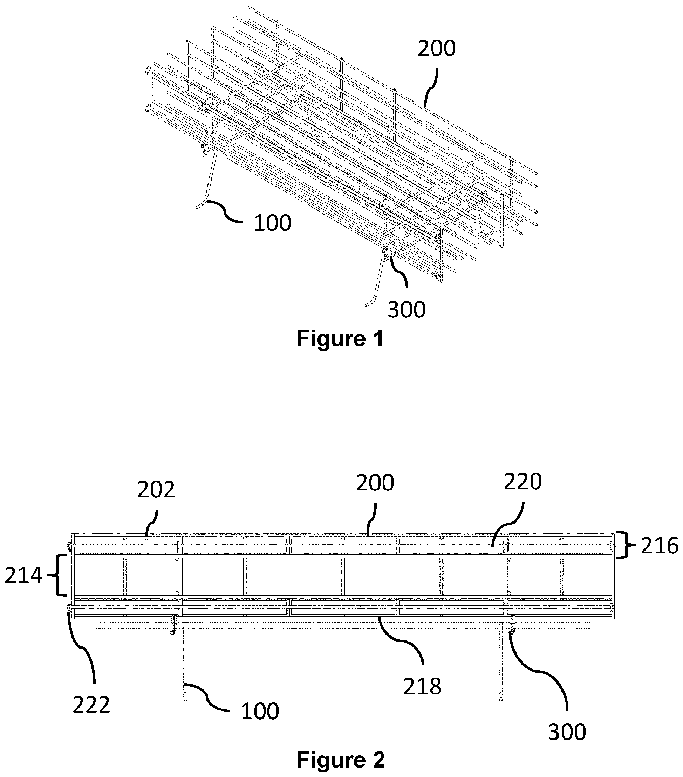

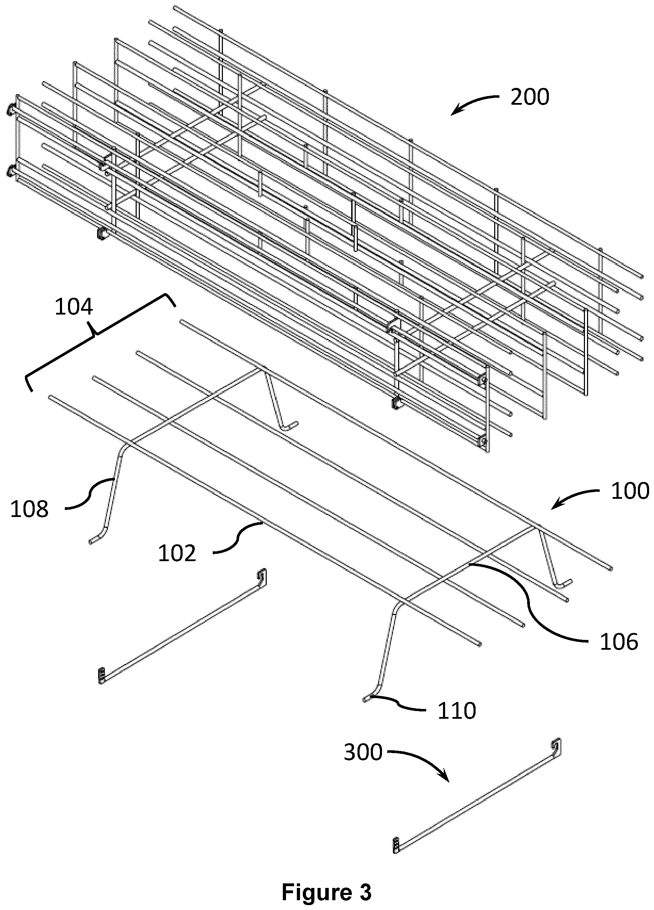

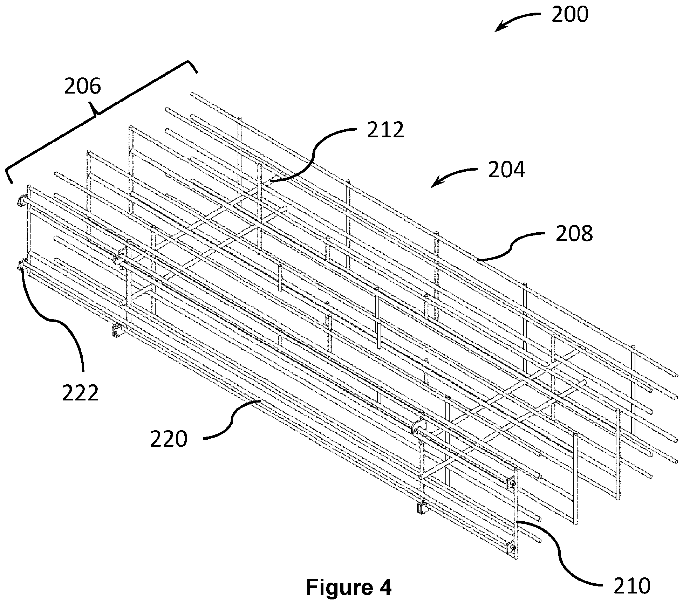

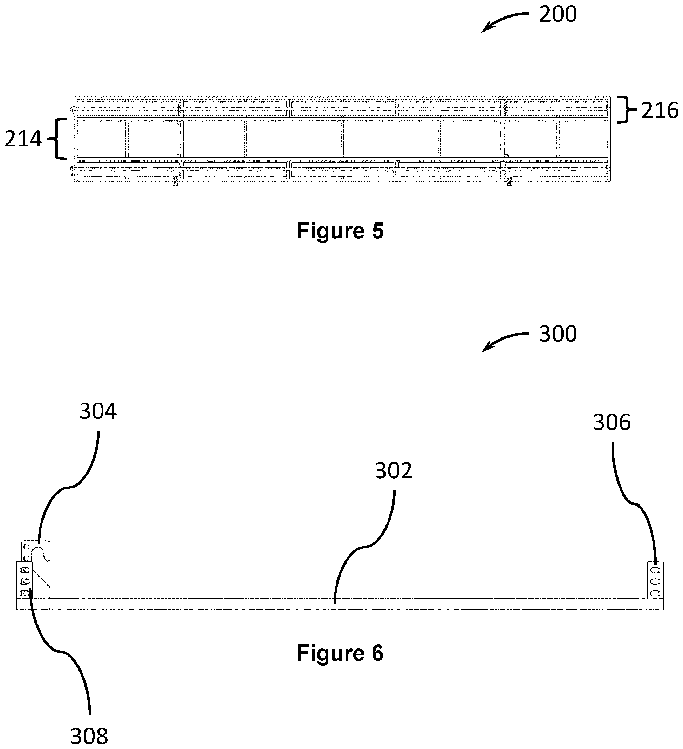

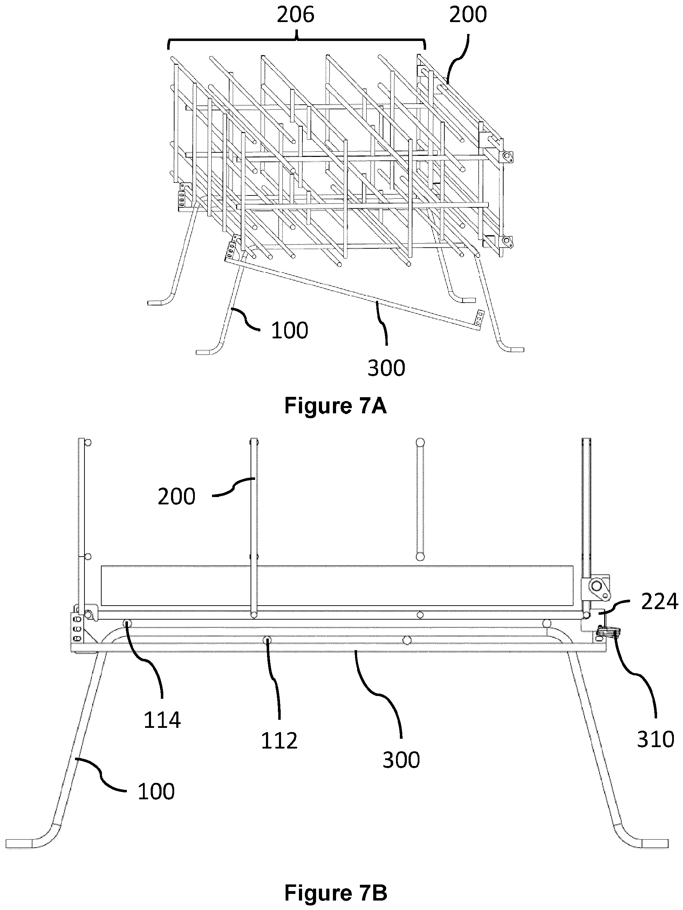

Referring firstly to Figures 1 to 3 of the drawings, a conventional trestle 100 is shown here in combination with a basket 200 of the invention that can be attached to the trestle 100 by fasteners 300 of the invention. The basket 200 is shown in isolation in Figures 4 and 5 and one of the fasteners 300 is shown in isolation in Figure 6. The operation of the fasteners 300 is shown in Figures 7A to 7C.

The trestle 100 is a table-like structure comprising parallel horizontal bars 102 that together define a horizontal supporting frame 104 for cultivation of shellfish such as oysters. The two-dimensional frame 104 is further defined by transverse horizontal cross-members 106 that join the bars. The cross-members 106 are spaced horizontally from each other.

Each cross-member 106 is oriented orthogonally relative to the bars 102 and extends into inclined legs 108 that lie in the same vertical plane as the cross-member 106 but splay downwardly from the frame 104 within that plane. The legs 108 bend outwardly at their bottom ends to define feet 110 that limit penetration of the legs 108 into soft seabed soil. Thus, the legs 108 hold the frame 104 defined by the bars 102 and the cross-members 106 at an elevated position spaced above the seabed, where shellfish supported on the frame 104 are best exposed to a nutrient-bearing flow of shallow tidal water.

Conventionally in the prior art, shellfish being cultivated on trestles 100 are held in shallow pouch-like mesh bags 202 that are fastened to the frame 104. The bags 202 must be released and refastened periodically so that the individual bags 202 can be agitated and turned over, which involves slow, repetitive and strenuous work in often challenging conditions. Moreover, multiple fasteners must be released from the frame 104 before inverting the bags 202 and refastened to the frame 104 after inverting the bags 202 or discarded if the fasteners are of single-use design such as cable ties. These numerous manual operations further complicate and slow the process of agitating and inverting the bags 202 and are likely to result in fasteners being broken, dropped or lost.

In accordance with the invention, multiple bags 202 of shellfish are held within a common basket 200 that is lifted in a horizontal orientation from the frame 104 serving as a supporting surface or substrate and then agitated and inverted to agitate and turn over all of the bags 202 in the basket 200 at the same time. The basket 200 is then lowered in a horizontal orientation back onto the frame 104 and reattached to the frame 104 by one or more fasteners 300 of the invention. Moreover, fasteners 300 of the invention need only act on the entire basket 200 and not on the individual bags 202 within the basket 200. This enables fewer, larger and more robust fasteners 300 to be used, those fasteners 300 being quick and easy to operate, reusable, and unlikely to be broken, dropped or lost.

Advantageously, the basket 200 and fastener 300 of the invention can be retro-fitted to existing conventional trestles 100 and so do not require adaptation of existing trestles 100 or investment in new trestles 100. Moreover, the basket 200 of the invention can hold conventional mesh bags 202 used in the cultivation of shellfish, and so does not require adaptation of existing bags 202 or investment in new bags 202.

The basket 200 of the invention shown in isolation in Figures 4 and 5 comprises a shallow cuboidal compartmented enclosure 204 of spaceframe construction comprising edge faces disposed between upper and lower faces. The enclosure is defined by layered arrays 206 of horizontally-extending bars 208, spaced vertically from each other by various upright bars or columns 210 that join, space apart and extend between neighbouring arrays 206. Transverse pairs of cross-members 212, oriented orthogonally relative to the bars 208, connect the bars 208 of each array 204 to each other either directly or indirectly via the columns 210. Optionally, as shown, the horizontal spacing between the pairs of cross-members 212 is similar to, or slightly greater than, the horizontal spacing between the cross-members 106 of the trestle 100.

In this example, four parallel arrays 206 of horizontal bars 208 define three levels between them in a stacked relation, namely a central access level 214 defined between the two inner arrays 206, sandwiched between two cultivation levels 216 each defined between a respective outer array 206 and a neighbouring one of the inner arrays 206. In this example, the basket 200 is substantially symmetrical about the access level 214.

As best appreciated in the side view of Figures 2 and 5, each cultivation level 216 comprises a row or series of compartments 218 each dimensioned to hold a respective conventional mesh bag 202 containing shellfish for cultivation. The compartments 218 are shaped to emulate the shallow, flattened profile of the bags 202, hence being much wider from side to side and deeper from front to rear than they are high from top to bottom. This enables the bags 202 to be held securely in the respective compartments 218 of the basket 200 without requiring additional fasteners acting between the bags 202 and the basket 200.

The compartments 218 of each cultivation level 216 are defined between neighbouring arrays of horizontal bars 206 and between horizontally-spaced upright elements or columns 210 that separate and retain the respective bags 202. Those columns 210 include end columns and rear columns that extend between all four arrays of horizontal bars 206.

It will be apparent that the parallel cultivation levels 216 of the basket 200 double the number of bags 202 that can be accommodated on each trestle 100 for a given plan area. Yet, the access level between the cultivation levels 216 provides access for nutrient-bearing water flow that would not be possible if, instead, bags 202 were simply stacked in two layers upon each other on the frame 104 of a conventional trestle 100.

All of the compartments 218 are accessible through an open front of the basket 200, whereby the bags 202 can be slid into and out of the respective compartments 218 through respective apertures in an edge face of the basket 200. The open front of the basket 200 can be closed by a retainer 220, which is removable from the basket 200 or is movable relative to the basket 200, for example by hinging. The retainer 220 is shown here in a closed position held against the basket by latches 222 aligned with the cross-members 212. The retainer 220 comprises parallel horizontal barrier bars that are each centrally aligned with a respective one of the cultivation levels 216, hence blocking the compartments 218 of the cultivation levels 216 to prevent the bags 202 from sliding out of the compartments 218.

The fastener 300 shown in Figure 6 comprises an elongate rod 302 with a downwardly-opening hook 304 upstanding from one end and a tab 306 upstanding from the other end, in the same vertical plane as the hook 304. The tab 306 is penetrated by at least one hole or slot, in this example a row of three slots. Also, in this example, the hook 304 can be adjusted to, and fixed in, various vertical positions relative to the rod 302. For this purpose, the hook 304 is repositionable relative to a bracket 308 upstanding from the rod 302. The hook 304 and/or the bracket 308 are penetrated by holes or slots that can be brought into mutual alignment in various positions of the hook 304 relative to the bracket 308 and hence relative to the rod 302.

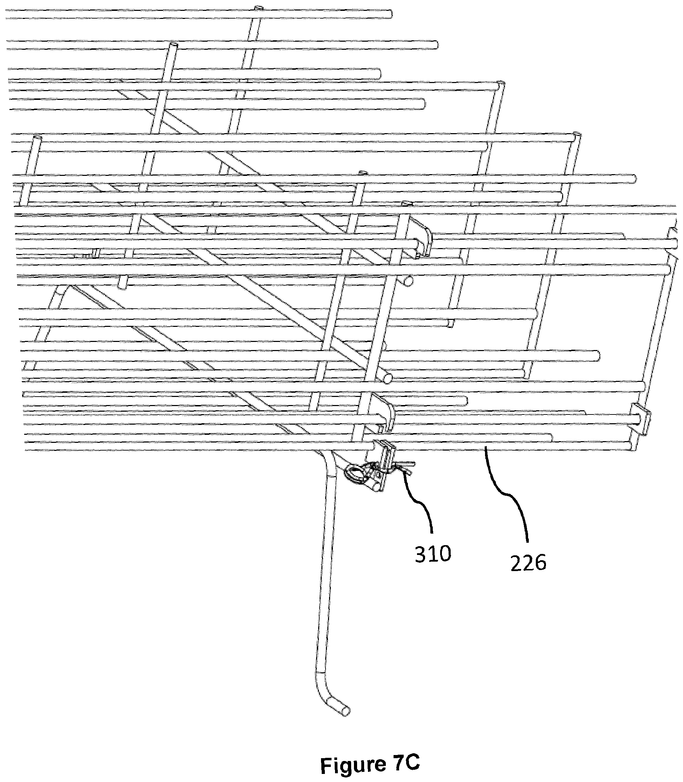

Referring now also to Figures 7A to 7C, when the basket 200 is supported on the frame 104 of the trestle 100, the hook 304 of the fastener 300 is firstly hooked onto the rearmost bar of the lowermost array of horizontal bars 206 of the basket 200. The fastener 300 is then pivoted about the hook 304 to lift the rod 302 of the fastener 300 against the underside of the frame 104, hence sandwiching the frame 104 between the rod 302 and the lowermost array 206 of the basket 200. The tab 306 at the other end of the rod 302 then engages a bracket 224 on the frontmost bar 226 of the lowermost array 206 of the basket 200 where, as shown in Figure 7C, a clip or pin 310 is inserted through holes in the bracket 224 aligned with one of the slots of the tab 306. The fastener 300 is thereby releasably engageable with the basket 200 and hence with the frame 104 of the trestle 100 sandwiched between the rod 302 and the bottom of the basket 200.

Elegantly, slight elastic bending of the rod 302 where it bears against the underside of the frame 104 pulls the basket 200 downwardly into firmer engagement with the frame 104. In this respect, it will be noted from Figure 7B that two innermost bars 112 of the frame 104 lie beneath the crossmembers 212 whereas the two outermost bars 114 of the frame lie above the crossmembers 212.

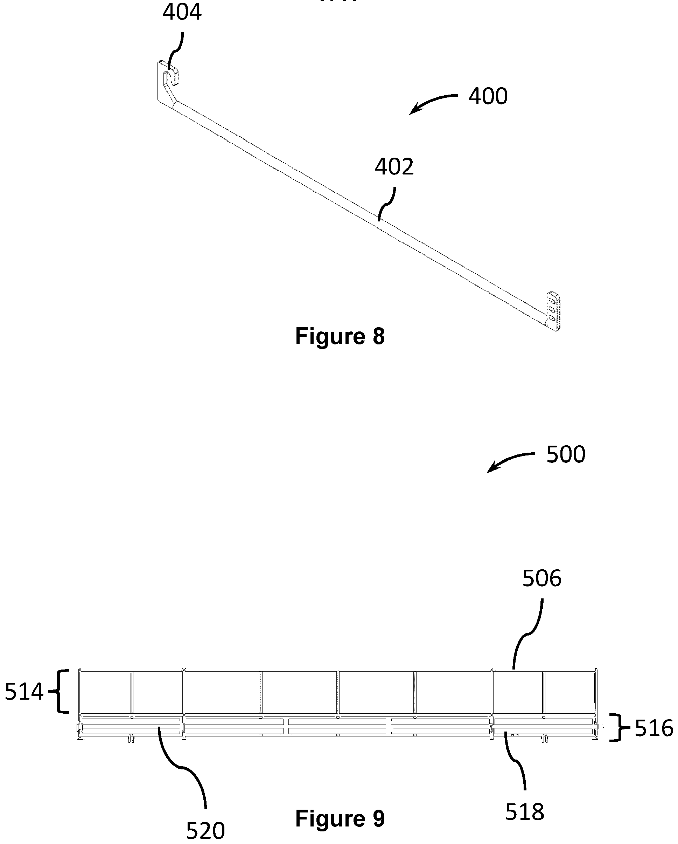

Figure 8 shows a simplified variant 400 of the fastener 300 shown in Figures 6 to 7C, in which the hook 404 is instead fixed to the rod 402 and so is non-adjustable.

Figure 9 shows a variant of the basket 500 in which three parallel layered arrays of horizontal bars 506 define just two levels between them, namely an access level 514 defined between one outer array and the inner array, and a cultivation level 516 defined between the inner array and the other outer array. Again, a retainer 520 closes the open front of the basket 500 but in this case has only one barrier bar aligned centrally with the series of compartments 518 of the cultivation level 516. This variant 500 may be appropriate where it is not desired to multiply the capacity of a given trestle 100 but where it is still advantageous to be able to agitate and turn multiple bags 202 in a single operation.

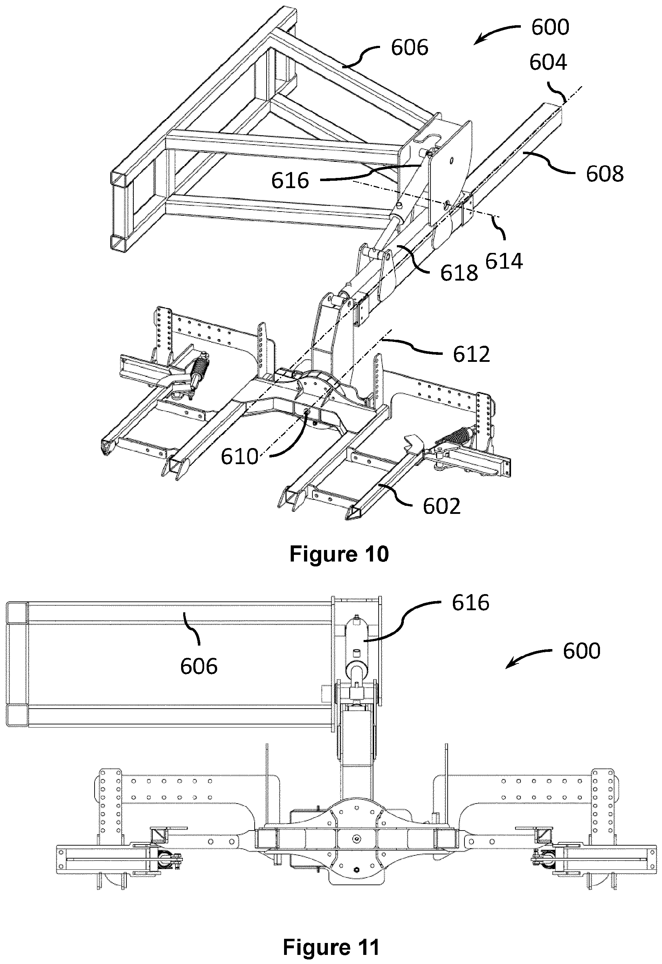

Figures 10 to 16 show various forms of apparatus 600 for manipulating a basket 200 of the invention. The apparatus 600 is designed to lift a basket 200, for example from a supporting trestle 100 or from the seabed together with a trestle 100, to agitate and to invert the basket 200 when lifted, hence agitating and inverting bags 202 of shellfish being cultivated in the basket 200, and then to lower and replace the basket 200 onto the trestle 100.

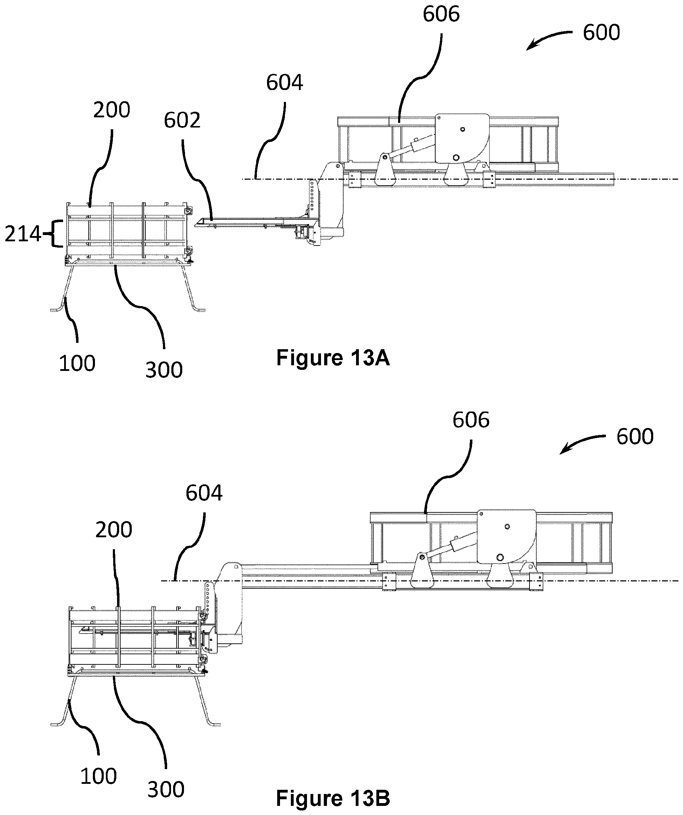

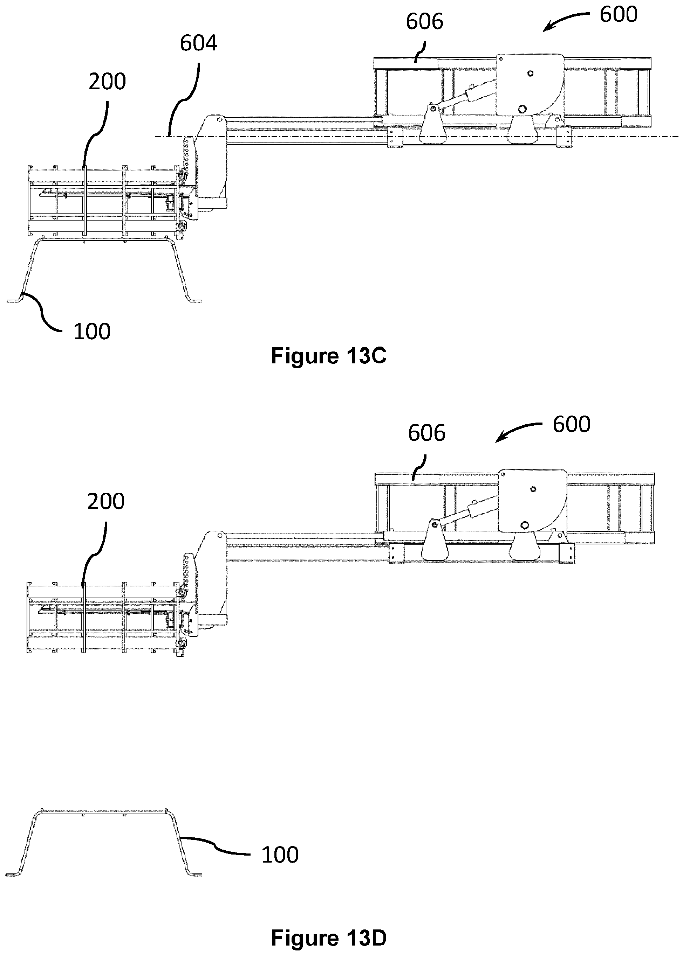

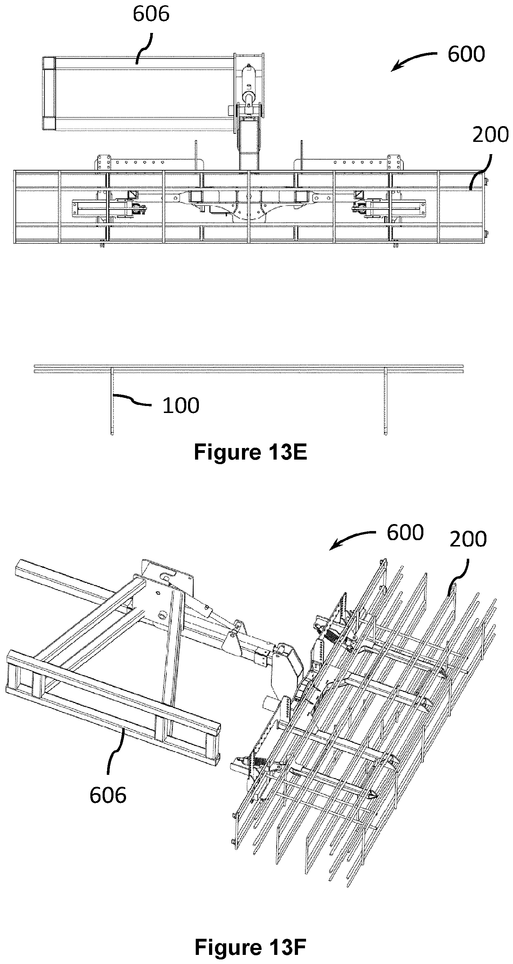

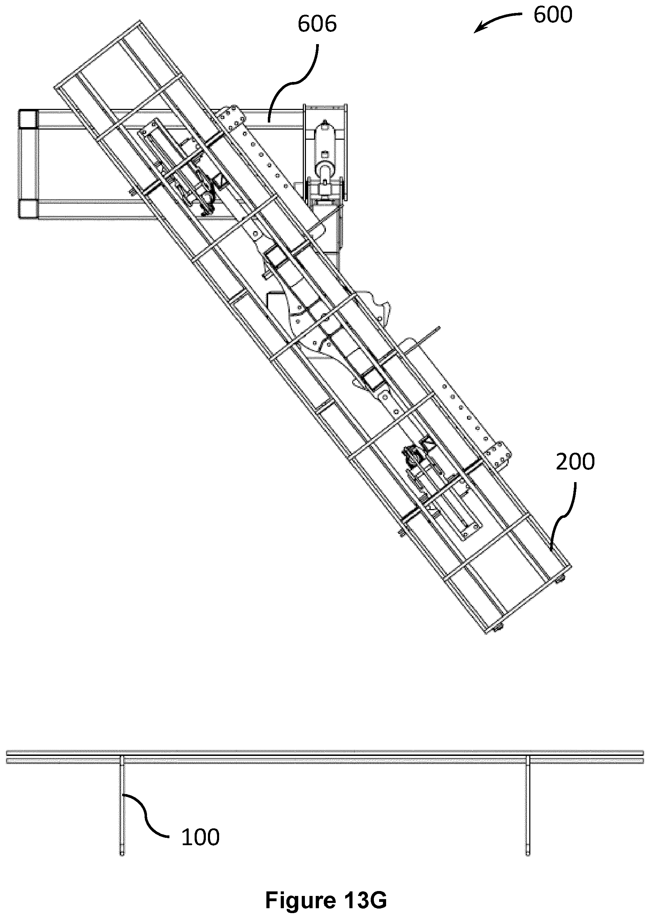

The apparatus 600 is intended to be mounted on the front or rear accessory drive of a vehicle such as a tractor. In use, the vehicle carrying the apparatus 600 advances along and beside a row of baskets 200 and brings the apparatus 600 into alignment with a selected one of those baskets 200. A lifting body such as a fork 602 or other engagement formation of the apparatus 600 is then advanced laterally on an axis 604 transverse to the direction of travel of the vehicle, to engage with the selected basket 200. For this purpose, the fork 602 is inserted into and engaged within the access layer 214 of the basket 200 as best appreciated in Figures 13A and 13B. The fastener 300 is then released as shown in Figure 13C, although in principle it would be possible to release the fastener 300 before inserting and engaging the fork 602 into and with the basket 200. The fork 602 is then lifted to raise the basket 200 from the trestle 100 as shown in Figures 13D to 13F to provide clearance for rotating the basket 200 about, or parallel to, the transverse axis 604 as shown in Figure 13G. This inverts the raised basket 200 before the inverted basket 200 is lowered back to a rest position on the trestle 100.

Beneficially, the fork 602 can also be rotated or otherwise moved in abrupt, jerky stop-start movements, which could possibly be sharply reciprocated or suddenly reversed, so as to shake the basket 200 and its contents to prevent the molluscs from "clumping" or adhering to one another. Additionally, or alternatively, the fork 602 may be mechanically coupled to the apparatus 600 through an eccentric drive configured to impart oscillating movement to the fork in order to agitate or shake the basket and its contents. This oscillation provided by the eccentric drive may be provided independently of rotation of the fork.

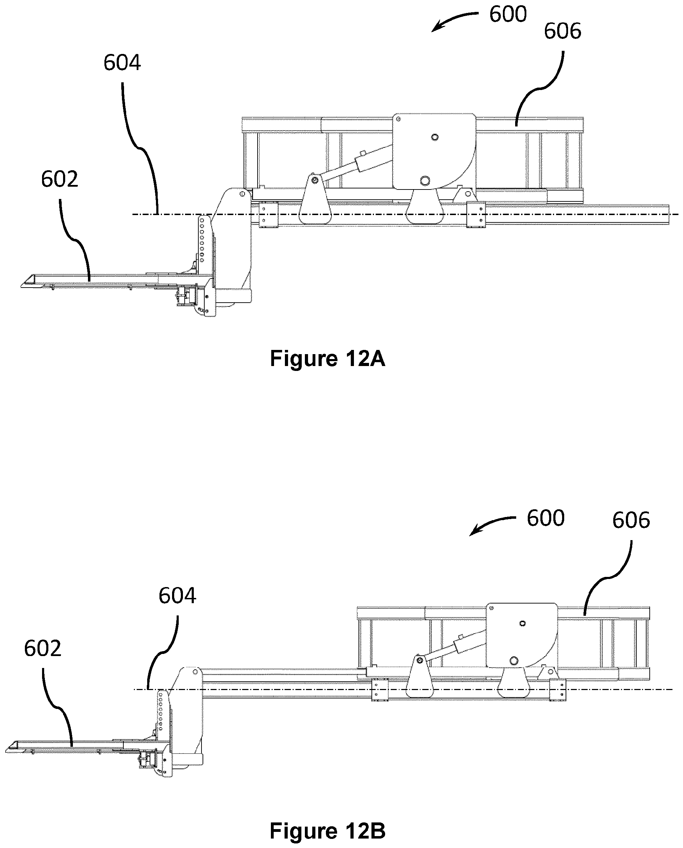

The apparatus 600 comprises a support structure 606 that is fixed to the vehicle and supports a beam 608 extending along the transverse axis. The fork 602 is cantilevered from a free end of the beam 608. The beam 608 can be extended to displace the fork 602 along the transverse axis 604 either by longitudinal translation of the beam 608 relative to the support structure 606, as shown in Figures 12A to 12B, or by telescopic lengthening of the beam 608. The longitudinal translation of the beam 608 is driven by a hydraulic cylinder 618 acting between the support structure 606 and the beam 608. At its free end, the beam 608 supports a hub 610 about which the fork 602 can be driven to pivot relative to the beam 608 about an axis 612 parallel to the transverse axis 604.

The support structure 606 can be raised or lowered to adjust the elevation of the beam 608 and the fork 602 relative to the vehicle. The beam 608 can also, or alternatively, be pivoted relative to the support structure 606 about a pivot axis 614 that is parallel to the direction of movement of the vehicle. That pivotal movement of the beam 608 is driven by a hydraulic cylinder 616 acting between the support structure 606 and the beam 608. Adjusting the inclination of the beam 608 relative to the horizontal in this way has the effect of raising or lowering the fork 602 at the free end of the beam 608.

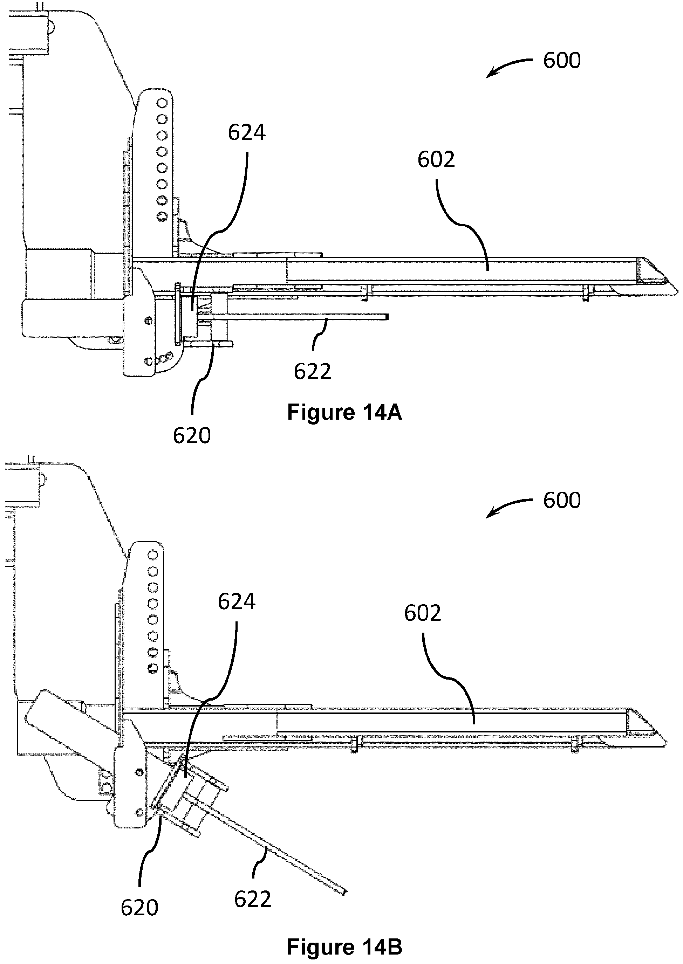

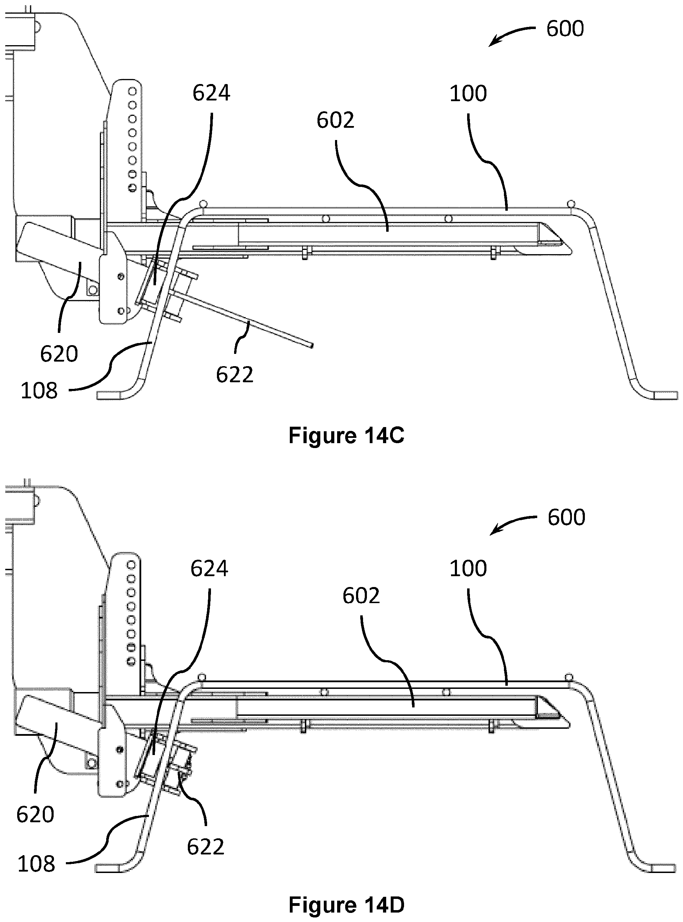

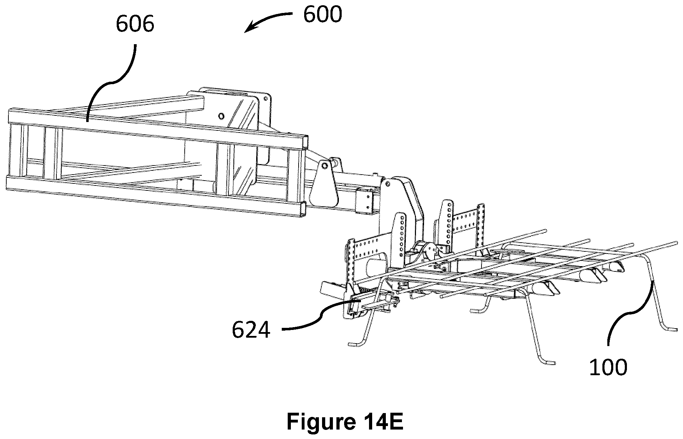

Figures 14A to 14E show an adaptation of the fork 602 comprising grippers 620 that can embrace and grip or latch to respective legs 108 of a trestle 100 while the fork 602 extends under and supports the frame 104 of the trestle 100. In this way, the trestle 100 can be lifted to agitate the contents of any bag 202 or basket that is supported by the trestle 100, while the grippers 620 retain the trestle 100 against sliding off the fork 602. In this example, each gripper 620 comprises an arm 622 that is pivotable about a generally upright axis to swing behind and to capture a leg 108 of the trestle 100 as shown in Figures 14C and 14D. Once the leg 108 of the trestle 100 is captured, the arm 622 presses the leg 108 against a resilient pad 624 of the gripper 620, hence sandwiching the leg 108 between the arm 622 and the pad 624 as best appreciated in Figure 14E to clamp the leg with the gripper.

Optionally, as best appreciated from Figures 14A and 14B, the structure of a gripper 620 is pivotable about a horizontal axis so that, when the gripper 620 structure is lowered, the arm 622 of the gripper 620 swings in a plane below the horizontal. Thus, the arm 622 of the gripper 620 pivots about an axis that remains generally upright but that is no longer vertical. That axis approximates to the inclination of the legs 108 of a conventional trestle 100, thus aligning the gripper 620 with that inclination to improve its grip on the inclined leg 108 as shown in Figures 14C and 14D.

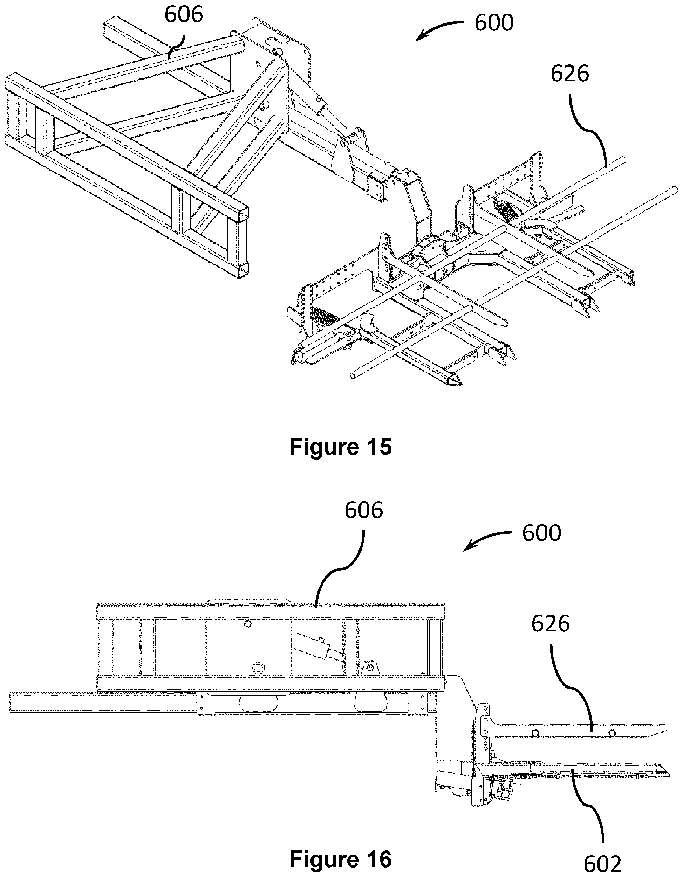

Turning finally to Figures 15 and 16, these drawings show a variant of the apparatus 600 that can be used to hold a basket 200 on a trestle 100 during manipulation or even to manipulate a trestle 100 that supports bags 202 of shellfish in a conventional manner. Here, a retaining structure 626 extends above and parallel to the fork 602, defining a vertical gap that can accommodate a basket 200 or a layer of bags 202 supported on a trestle 100. The retaining structure 626 thereby overlies and holds basket 200 or the bags 202 against the trestle 100. The vertical gap between the retaining structure 626 and the fork can be adjusted by aligning holes in the retaining structure with selected holes in a linear array extending above the fork.

Many other variations are possible within the inventive concept. For example, the cultivation level could comprise one large compartment containing more than one bag disposed side by side rather than being subdivided into a plurality of compartments each containing only one bag.

There could be more than two cultivation levels, especially as cultivation levels may be accessed through respective apertures in edge faces of the basket.

The fork or other engagement formation can be adjusted manually or automatically, for example in width, to adapt to different shapes and sizes of load to be lifted.

Grippers akin to those shown in Figures 15A to 15E could also be used to engage upright members of a basket of the invention. The positions of the grippers relative to the engagement formations may be adjustable.

Further features and aspects of the invention may reside in the below clauses:
1. A method of aquaculture, comprising:
   cultivating marine organisms in a series of cultivation bags disposed in side-by-side, edge-to-edge relation;
   lifting the series of bags together from a supporting surface or substrate;
   turning the series of bags together; and
   replacing the series of bags onto the supporting surface or substrate together.
2. The method of Clause 1, further comprising agitating the series of bags together.
3. The method of Clause 1 or Clause 2, comprising lifting the series of bags from, and replacing the series of bags onto, a trestle that serves as the supporting surface.
4. The method of Clause 3, comprising cultivating the organisms in the series of bags held together in a basket, and lifting, turning and replacing the basket containing the series of bags.
5. The method of Clause 4, comprising fastening the basket to the trestle by capturing a frame of the trestle between a lower face of the basket and one or more fasteners extending parallel to the lower face of the basket.
6. The method of Clause 4 or Clause 5, comprising holding parallel series of bags in respective levels of the basket one above another, those levels being separated by an intermediate level of the basket that defines a water channel sandwiched between the parallel series of bags.
7. The method of any of Clauses 4 to 6, comprising engaging the basket with an engagement formation of a manipulating machine, and using the machine to lift, turn and replace the basket.
8. The method of Clause 7 when dependent on Clause 6, comprising inserting the engagement formation of the machine into the intermediate level of the basket between the parallel series of bags.
9. The method of Clause 7 or Clause 8, comprising inserting the engagement formation of the machine into the basket at a level above or below the series of bags.
10. The method of any of Clauses 4 to 9, comprising loading or unloading bags through at least one aperture in an edge face of the basket extending between major upper and lower faces of the basket.
11. The method of Clause 10, comprising closing the or each aperture with a movable or removable closure after loading the bags into the basket.
12. The method of Clause 11, comprising closing two or more apertures by placing a common closure across the apertures.
13. The method of Clause 1 or Clause 2, comprising lifting the series of bags on a trestle from the seabed, the seabed serving as the supporting surface.
14. The method of Clause 13, comprising engaging the trestle with an engagement formation of a manipulating machine, and using the machine to lift, turn and replace the trestle.
15. The method of Clause 14, further comprising gripping one or more legs of the trestle with the machine.
16. The method of Clause 14 or Clause 15, further comprising restraining the series of bags on the trestle with a retaining structure of the machine, spaced from the engagement formation.
17. The method of any of Clauses 7 to 12 or 14 to 16, comprising:
   advancing the machine along a direction of travel to a position beside the basket or trestle;
   extending the engagement formation toward the basket or trestle in a direction transverse to the direction of travel;
   engaging the engagement formation with the basket or trestle;
   lifting the engagement formation with the engaged basket or trestle; and
   turning the engagement formation with the engaged basket or trestle.
18. The method of Clause 17, comprising advancing the machine supported on a vehicle, and extending, lifting and turning the engagement formation relative to the vehicle.
19. An aquaculture basket comprising edge faces disposed between upper and lower faces, wherein the basket contains:
   at least one cultivation level that is configured to hold a series of cultivation bags in side-by-side, edge-to-edge relation, at which level the edge faces of the basket are closed sufficiently to retain the bags within; and
   at least one access level, at which level at least one of the edge faces of the basket is open to provide internal access to the basket;
   and the basket further comprises a closure that closes at least one aperture through which the bags can be inserted into the cultivation level, which closure can be moved or removed to open the or each aperture.
20. The basket of Clause 19, wherein the aperture is in an edge face of the basket.
21. The basket of Clause 20, wherein the closure comprises at least one barrier extending across the aperture parallel to the edge face.
22. The basket of any of Clauses 19 to 21, defined by a framework of elongate members disposed in substantially parallel arrays, those arrays defining the or each cultivation level and the or each access level between them.
23. The basket of Clause 22, wherein the arrays further define the upper and lower faces of the basket.
24. The basket of Clause 22 or Clause 23, wherein the cultivation level is subdivided into a row of compartments by upright elements that extend between the arrays defining the cultivation level.
25. The basket of Clause 24, wherein a common closure extends along the row of compartments to close apertures communicating with the respective compartments.
26. The basket of Clause 24 or Clause 25, wherein fewer upright elements extend between the arrays defining the access level.
27. The basket of any of Clauses 19 to 26, comprising first and second cultivation levels that sandwich the access level between them.
28. The basket of any of Clauses 19 to 27, further comprising legs that extend outwardly relative to the upper and/or lower faces.
29. In combination, the basket of any of Clauses 19 to 28 and a fastener comprising an elongate rod that is engageable with the lower face of the basket at locations mutually spaced along the rod, those locations also being adjacent to respective opposed edge faces of the basket.
30. In combination, an aquaculture basket and a fastener comprising an elongate rod that is engageable with a lower face of the basket at locations mutually spaced along the rod, those locations also being adjacent to respective opposed edge faces of the basket.
31. The combination of Clause 29 or Clause 30, wherein at least one end of the rod comprises a hook that is engageable with the lower face of the basket to define a pivot axis for pivotal movement of the rod relative to the basket.
32. The combination of any of Clauses 29 to 31, further comprising a trestle beneath the basket, a supporting frame of the trestle being captured between the rod and the lower face of the basket.
33. A machine for manipulating a set of aquaculture bags supported together on a trestle or in a basket, the machine comprising:
   a support structure configured for attachment to a vehicle;
   an engagement formation cantilevered from a beam that is movable or extensible relative to the support structure in a direction transverse to a direction of travel of the vehicle; and
   a pivot supporting the engagement formation for pivotal movement relative to the support structure about an axis transverse to the direction of travel of the vehicle.
34. The machine of Clause 33, wherein the pivot acts between the engagement formation and the beam.
35. The machine of Clause 33 or Clause 34, wherein the pivot turns on an axis that is offset downwardly relative to the beam.
36. The machine of any of Clauses 33 to 35, wherein the beam is pivotable relative to the support structure about an axis that is parallel to the direction of travel of the vehicle.
37. The machine of any of Clauses 33 to 36, wherein the support structure is arranged to elevate the beam relative to the vehicle.
38. The machine of any of Clauses 33 to 37, further comprising at least one gripper that is movable with the engagement formation, the gripper comprising an arm that is pivotable about an upright axis to capture an upright member of the trestle or basket.
39. The machine of Clause 38, wherein the gripper is pivotable about a substantially horizontal axis to change the orientation of the upright axis.
40. The machine of any of Clauses 33 to 39, further comprising an auxiliary retaining structure extending above and generally parallel to the engagement formation.
41. A vehicle fitted with the machine of any of Clauses 33 to 40.

## Claims

1. A machine for manipulating one or more aquaculture bags supported on a trestle or in a basket, the machine comprising:
a support structure configured for attachment to a vehicle;
an engagement formation cantilevered from a beam that is movable or extensible relative to the support structure in a direction transverse to a direction of travel of the vehicle; and
a pivot supporting the engagement formation for pivotal movement relative to the support structure about an axis transverse to the direction of travel of the vehicle.

2. The machine of Claim 1, wherein the pivot acts between the engagement formation and the beam.

3. The machine of Claim 1 or Claim 2, wherein the pivot turns on an axis that is offset downwardly relative to the beam.

4. The machine of any preceding claim, wherein the beam is pivotable relative to the support structure about an axis that is parallel to the direction of travel of the vehicle.

5. The machine of any preceding claim, further comprising at least one gripper that is movable with the engagement formation, the gripper comprising an arm that is pivotable about an upright axis to capture an upright member of the trestle or basket.

6. The machine of Claim 5, wherein the gripper is pivotable about a substantially horizontal axis to change the orientation of the upright axis.

7. The machine of any preceding claim, further comprising an auxiliary retaining structure extending above and generally parallel to the engagement formation.

8. The machine of any preceding claim, further comprising an eccentric drive configured to impart oscillating movement to the engagement formation.

9. A vehicle fitted with the machine of any preceding claim.

10. A method of manipulating one or more aquaculture bags supported on a trestle or in a basket, the method comprising:
advancing a manipulating machine along a direction of travel to a position beside the basket or trestle;
extending an engagement formation of the machine toward the basket or trestle in a direction transverse to the direction of travel;
engaging the engagement formation with the basket or trestle;
lifting the engagement formation with the engaged basket or trestle; and
turning the engagement formation with the engaged basket or trestle.

11. The method of Claim 10, comprising advancing the machine supported on a vehicle, and extending, lifting and turning the engagement formation relative to the vehicle.

12. The method of Claim 10 or Claim 11 and comprising, while a series of the bags remains supported on the trestle or in the basket:
lifting the series of bags together from a supporting surface or substrate; turning the series of bags together; and
replacing the series of bags onto the supporting surface or substrate together.

13. The method of any of Claims 10 to 12, further comprising gripping one or more legs of the trestle with the machine.

14. The method of any of Claims 10 to 13, further comprising restraining the or each bag on the trestle with a retaining structure of the machine, spaced from the engagement formation.

15. The method of any of Claims 10 to 14, further comprising oscillating the basket or trestle while it is engaged by the machine.
